# EUROPEAN PATENT APPLICATION

(11) **EP 4 650 410 A1**
(43) Date of publication of application: **19.11.2025**
(21) Application number: 25749596.0
(22) Date of filing: 21.02.2025
(51) Int. Cl.: C09J 7/26, C09J 7/30, C09J 151/06, C09J 7/21, C09J 123/08, C09J 127/16

(54) **HIGH-PERMEABILITY TAPE AND PREPARATION METHOD THEREFOR AND USE THEREOF**

(30) Priority: 15.03.2024 CN 202410301437
(71) Applicant: Steadychem (Shanghai) Co., Ltd, Pudong New Area Shanghai 200120 (CN); Steady New Material (Suzhou) Co., Ltd, Suzhou Industrial Park Suzhou, Jiangsu 215127 (CN)
(72) Inventor: BO, Tao, Shanghai 200120 (CN); PAN, Ting, Shanghai 200120 (CN); FANG, Wangsheng, Shanghai 200120 (CN)
(74) Representative: Murgitroyd & Company
(86) International application number: PCT/CN2025/078652
(87) International publication number: WO 2025/190063

(57) **Abstract**

Provided are a high-permeability adhesive tape, a preparation method therefor and application thereof. The adhesive tape includes a laminated porous substrate and an adhesive layer; the porous substrate has a thickness of 5-50 µm and an air permeability of 50-450 s/100 mL, and the porous substrate comprises at least one of a porous separator or nonwoven fabric; the discontinuous adhesive layer is formed by coating a thermoplastic coating solution onto at least one surface of the porous substrate; and the thermoplastic coating solution is an aqueous coating solution or a solvent-based coating solution, including an olefin polymer and optionally a tackifying resin; the adhesive tape has an initial air permeability of P₁≤2.5×P₀, where P₀ represents the air permeability of the porous substrate; after high-temperature aging, the adhesive tape has an air permeability of P₂≤4.0×P₁; and after electrolyte immersion, the adhesive tape has an air permeability of P₃≤1.2×P₁.

## Description

### TECHNICAL FIELD

The present disclosure belongs to the technical field of battery tapes, and particularly relates to a high-permeability adhesive tape, a preparation method therefor and application thereof.

### BACKGROUND

In a normal battery production process, a positive electrode sheet is wound together with a separator and a negative electrode sheet, and then subjected to processes such as hot pressing, electrolyte injection, and formation to produce a battery cell. Due to the inherent brittleness of the electrode sheets, inner layers of the wound electrode sheets in the battery cell usually experiment significant bending at cell corners, resulting in strong stress, making them prone to cracking after hot pressing, and causing detachment of active materials. These problems will adversely affect the yield rate and safety of the battery cell. Moreover, during the battery cycling, lithium plating may occur at the corners of the battery, and the wound battery cell may deform, which can lead to the breakage of the electrode sheets at the corners, thereby affecting the safety and cycle performance of the battery.

Applying adhesive tape to the electrode sheets at the corners of the battery cell can effectively prevent problems such as electrode sheet cracking during hot pressing, lithium plating at the corners of the battery cell, and deformation and fracture of the battery cell. Using an adhesive tape with a flexible substrate can help prevent cracking of the tape substrate. Conventional tapes used in lithium batteries are generally resistant to electrolyte. The adhesive layers of the tapes usually use acrylic pressure-sensitive adhesives or hot-melt adhesives, and the substrates are usually polyethylene terephthalate (PET), biaxially oriented polypropylene (BOPP) and other films. These types of tapes have low solubility in electrolyte and are impermeable to lithium ions, which limits their applicability at the inner corners of battery cells.

The Chinese Invention Patent CN101017916A discloses a high-safety lithium-ion battery with a protective film attached to a separator, and the battery includes a positive electrode, a negative electrode, a separator, an electrolyte, and a battery case. An adhesive tape or an adhesive film is arranged at edges of the separator where the electrode coating starts and ends. The separator with the adhesive tape or the adhesive film is placed between the positive electrode and the negative electrode. The positive electrode, the separator and the negative electrode are then wound together to form an electrode assembly. The electrode assembly is placed inside the battery case, followed by electrolyte injection, sealing, and formation processes to complete the lithium-ion battery. The adhesive tape or the adhesive film on the separator has a thickness of 10 µm-30 µm. The adhesive film is either a spray-polymerized adhesive film or a heat-pressed acrylic polypropylene (PP) adhesive film. The polymerization of the adhesive film is implemented through either photopolymerization or thermal polymerization, and a temperature of the thermal polymerization is less than or equal to 90°C. However, in the invention, a PP adhesive layer with a thickness of 10-30 µm fully covers the separator, which significantly reduces the lithium-ion permeability of the separator. This results in lithium-ion accumulation and lithium plating at electrode corners, thereby degrading battery performance.

The Chinese Invention Patent CN115651554A discloses a battery separator adhesive tape with a dissolvable adhesive layer and a preparation method thereof. The tape includes a battery separator and an adhesive layer disposed on a surface of the separator. An adhesive forming the adhesive layer includes the following raw materials in percent by weight: 40-60% solvent-based polyacrylate, 10-30% polyvinyl acetate, 5-15% polystyrene resin, 0.1-0.5% initiator, 0.5-1.0% curing agent, and 0-30% solvent. The adhesive layer of the tape provided in the invention can rapidly dissolve in the electrolyte and does not block normal migration of lithium ions. However, once dissolved, the adhesive layer can no longer provide support at the cell corners, resulting in rupture of the separator. This may cause a short circuit and generate an uneven electric field on a surface of the negative electrode, thereby leading to lithium plating.

Therefore, those skilled in the prior art are in an urgent need to optimize existing electrolyte-resistant battery tape materials and structures so that the adhesive tape, without hindering lithium-ion transport, can protect the electrode sheets from cracking under stress during hot pressing and also protect the electrode separator during the battery cycling to prevent lithium plating, thereby extending the service life of the battery.

### SUMMARY

In order to solve the above problems, the present disclosure provides a high-permeability adhesive tape for a lithium battery, a preparation method therefor and application thereof. The high-permeability adhesive tape is particularly suitable for the lithium battery, and can protect, without hindering lithium-ion transport, electrode sheets of the lithium battery from cracking under stress during hot pressing and also protect the electrode separator during the battery cycling to prevent lithium plating.

In a first aspect, the present disclosure provides a high-permeability adhesive tape, including a laminated porous substrate and an adhesive layer;
the porous substrate has a thickness of 5-50 µm and an air permeability of 50-450 s/100 mL, and the porous substrate includes at least one of a porous separator or nonwoven fabric; the discontinuous adhesive layer is formed by coating a thermoplastic coating solution onto at least one surface of the porous substrate; and the thermoplastic coating solution is an aqueous coating solution or a solvent-based coating solution, including an olefin polymer, and optionally a tackifying resin;
the adhesive tape has an initial air permeability of P₁≤2.5×P₀, where P₀ represents an air permeability of the porous substrate;
after high-temperature aging, the adhesive tape has an air permeability of P₂≤4×P₁; and
after electrolyte immersion, the adhesive tape has an air permeability of P₃≤1.2×P₁.

In the present disclosure, the adhesive layer is a discontinuous adhesive layer containing an olefin polymer. Since the olefin polymer has excellent chemical stability and mechanical strength, it can provide good structural support during battery operation without being degraded by the electrolyte. In addition, the olefin polymer is cost-effective and can reduce the overall cost of the battery. Therefore, the present disclosure employs the olefin polymer as a main material of the adhesive layer. However, the olefin polymer has a self-closing property at high temperatures, that is, their pores will close automatically in a high-temperature environment, which reduces the permeability of the adhesive layer. In order to eliminate the influence of the property on the adhesive layer, the present disclosure first forms an aqueous coating solution or a solvent-based thermoplastic coating solution using the olefin polymer, and then applies the coating solution on a high-permeability porous substrate; and after drying, a discontinuous adhesive layer is formed. By utilizing a volume proportion of water or solvent in the coating solution, interstitial gaps between the adhesive layers are enlarged to increase the overall permeability of the adhesive tape while maintaining the bonding performance and mechanical strength. Furthermore, when the aqueous coating solution is used, the microspherical olefin polymer in an aqueous emulsion can maintain its appearance and morphology at high temperatures, without blocking a lithium-ion transport channel.

Preferably, after high-temperature aging (for example, the adhesive tape is baked at 110 °C for 24 h, and then taken out to cool to room temperature for testing), the adhesive tape has an air permeability of P₂≤2.5×P₁, and more preferably, P₂ satisfies the relationship: P₂=Aₕ×P₁-Bₕ, where Aₕ falls within a range of 1.2-2.2, and Bₕ falls within a range of 0-30; and after electrolyte immersion (for example, the adhesive tape is completely submerged in an electrolyte solvent, then baked at 85 °C for 24 h, taken out and wiped a surface thereof, and test is performed after resting for 20 min; where the electrolyte solvent is composed of 20 wt% EC, 50 wt% EMC, and 30 wt% EP), an air permeability P₃ of the adhesive tape satisfies P₃=Aₑ×P₁+Bₑ, where Aₑ falls within a range of 1.02-1.1, and Bₑ falls within a range of 0-15. Preferably, the olefin polymer has a melting point of 60-150 °C, and is selected from at least one of polyolefin resin, an ethylene-vinyl acetate copolymer, an ethylene-acrylic acid copolymer, an ethylene-ethyl acrylate copolymer, an ethylene-methyl acrylate copolymer, an ethylene-methacrylic acid copolymer, and polyvinylidene fluoride (PVDF); and the tackifying resin is selected from at least one of hydrogenated C5 resin, hydrogenated C9 resin, hydrogenated C5/C9 copolymer resin, hydrogenated dicyclopentadiene (DCPD), hydrogenated rosin, and hydrogenated polyterpene resin.

Preferably, the polyolefin resin is selected from at least one of polypropylene resin, an amorphous α-olefin copolymer, an ethylene-octene or ethylene-butene copolymer, maleic anhydride-grafted polyolefin, acrylic acid-grafted polyolefin, methacrylic acid-grafted polyolefin, and acrylic acid/methacrylic acid blend-modified polyolefin.

Preferably, the porous substrate includes a porous separator having a porosity of 30-60%, and is selected from at least one of a single-layer polypropylene (PP) separator, a multi-layer PP separator, a single-layer polyethylene (PE) separator, a multi-layer PE separator, a PP/PE composite separator, a PP/PE/PP sandwich separator, and a polyvinylidene fluoride (PVDF) separator; and/or
the porous substrate includes nonwoven fabric having a pore size of ≤10 µm, and is selected from at least one of PP nonwoven fabric, PE nonwoven fabric, PET nonwoven fabric, and PTFE nonwoven fabric.

The porous substrate used in the present disclosure exhibits a significantly higher porosity than solid film materials such as PET film, PI film, and BOPP film. These pores facilitate the penetration of electrolyte, thereby providing a better ion conduction path, which helps reduce internal resistance and enhances the power output of the battery. Furthermore, the above porous substrate, such as porous polypropylene (PP) and polyethylene (PE) materials, has relatively high melting points at a high temperature, which helps maintain the integrity of the separator under overheating conditions, thereby reducing a risk of short circuit.

Preferably, the thermoplastic coating solution is an aqueous coating solution and includes, in parts by weight, the following raw materials:
98-99.5 parts of aqueous emulsion;
0-40 parts of inorganic filler; and
0-2 parts of a wetting agent;
the aqueous emulsion has a solid content of 1-40% and includes emulsion microspheres; the emulsion microspheres contain the olefin polymer, and the emulsion microspheres have a median particle diameter (D₅₀) of 0.2-2 µm; and

The inorganic filler includes at least one of aluminum hydroxide, aluminum oxide, boehmite, zinc oxide, magnesium oxide, and boron nitride, with a median particle diameter (D₅₀) of 0.5-5 µm; and
the wetting agent includes an anionic wetting agent or a nonionic wetting agent. Specifically, the anionic wetting agent is selected from at least one of alkyl sulfate, alkyl sulfonate, higher fatty acid salt, phosphate ester, fatty acid, or fatty acid sulfate salt; and the nonionic wetting agent is selected from at least one of polyoxyethylene alkylphenol ether, polyoxyethylene fatty alcohol ether, and EO/PO block copolymer, with a hydrophile-lipophile balance (HLB) value of 5-20, and preferably 7-13.

The aqueous coating solution used in the present disclosure can form a uniform but discontinuous adhesive layer on a surface of the adhesive tape using the emulsion microsphere drying technology. The uniformity helps ensure uniform distribution of electrolyte and efficient ion transport, thereby improving the overall performance and stability of the battery. Moreover, by adjusting the composition, size, and concentration of the emulsion microspheres, a microstructure of the adhesive layer, including porosity and pore size distribution, can be precisely controlled, the permeability of electrolyte and transport speed of ions are optimized, which are critical for improving charge/discharge efficiency and power density of the battery. Furthermore, by adding various functional materials, such as conductive materials, flame retardants, or self-healing materials, to the emulsion, the adhesive tape can be endowed with additional functions without compromising its air or moisture permeability, which allows for greater flexibility in battery design to meet specific application requirements.

Preferably, the aqueous emulsion further includes 0.01-10 wt% of an emulsifier, and optionally, a co-emulsifier and a defoamer;
the emulsifier is selected from at least one of C8-C18 higher fatty acid salt, alkyl sulfate, alkyl sulfonate, phosphate ester, polyoxyethylene fatty alcohol ether, polyoxyethylene alkylphenol ether having an EO segment of ≤ 20, and EO/PO block copolymer having an EO+PO segment of 20-80; and
the co-emulsifier is selected from C2-C5 short-chain alcohol or polyglycerol ester; and the co-emulsifier is evaporated when the preparation of aqueous emulsion is completed, therefore, almost no residue is left in the aqueous coating solution and in the final adhesive layer.

The defoamer is selected from one or more of a polysiloxane defoamer, a silicone emulsion defoamer, a polyether defoamer, a polyether-modified silicon defoamer, and a higher fatty alcohol defoamer.

The aqueous coating solution may be prepared according to the above raw material ratios, following the existing emulsion preparation technology. The aqueous emulsion dispersed with microspheres may be prepared using a hot melt method, a granulation dispersion method, a phase inversion method and other processes. Particle sizes of the emulsion microspheres may be adjusted by controlling types and amounts of the emulsifier, the co-emulsifier, and the solvent, as well as process parameters such as heating temperature, high-speed dispersion/shear rate, pressure, and duration. Subsequently, the inorganic filler, the colorant, the wetting agent, and other components may be added as needed to obtain the aqueous coating solution.

Preferably, the thermoplastic coating solution is a solvent-based coating solution, including the olefin polymer, a solvent, and optionally inorganic filler. A concentration of the olefin polymer is 5-20 wt%, and the solvent-based coating solution is applied to form the discontinuous adhesive layer by spraying. The solvent is selected from at least one of an aromatic hydrocarbon solvent, a ketone solvent or an aliphatic hydrocarbon solvent. The inorganic filler in the coating solution has a mass concentration of 0-30 wt%, and includes aluminum hydroxide, aluminum oxide, boehmite, zinc oxide, magnesium oxide, and boron nitride, with a median particle diameter (D₅₀) of 0.5-5 µm; and Unlike the aqueous coating solution that can be applied by various coating methods, the uniform solvent-based coating solution needs to be sprayed to form discontinuous droplets, and the solvent therein is evaporated to leave behind uniform but discontinuous to obtain an adhesive layer.

Preferably, the adhesive tape further includes at least one release layer, and the release layer is laminated on a surface of the porous substrate opposite to the adhesive layer and/or on a surface of the adhesive layer opposite to the porous substrate. A release agent may be coated on a surface of the porous substrate opposite to the adhesive layer to form one release layer; and a release film may be laminated on a surface of the adhesive layer opposite to the porous substrate to form another release layer.

In a second aspect, the present disclosure provides a preparation method for the high-permeability adhesive tape, including the following steps:
step 1: preparing a thermoplastic coating solution containing an olefin polymer;
step 2: applying the thermoplastic coating solution onto at least one surface of the porous substrate, with a coating weight of 0.01-80 g/m²; and
step 3: drying the thermoplastic coating solution to obtain the high-permeability adhesive tape.

In the step 3, a drying method is preferably a drying tunnel, with a drying temperature of 30-150 °C, and preferably 50-120 °C; and drying time is 10-300 s, and preferably 60-180 s.

In a third aspect, the present disclosure further provides application of the above high-permeability adhesive tape in electrode sheet protection, anode bonding, tab protection, and winding termination of a lithium battery. The adhesive tape is adhered to a bonding location by cold pressing or hot pressing. When in use, the adhesive tape with a release layer may be directly bonded onto the bonding location by cold pressing, while the adhesive tape without a release layer may be attached to a desired bonding site, such as a location where the electrode sheet is subjected to a large bending amplitude during the winding of electrode sheet, by activating the pressure sensitivity of the adhesive layer through hot pressing. A temperature of the hot pressing is 70-160°C. In the subsequent shaping process, it can effectively prevent the electrode sheets from cracking and improve the yield of battery products. An overall high air permeability of the adhesive tape does not block the transport of lithium ions. In addition, during the battery cycling, it can effectively solve the problems of lithium plating, deformation and fracture at the corners of battery cell. In addition, the adhesive tape can also be used for edge protection of electrode sheets, tab protection, and winding termination, etc.

The present disclosure has at least the following beneficial effects:
(1) The present disclosure applies an olefin polymer in the form of a thermoplastic coating solution onto a porous and breathable substrate and dries it to form a uniform but discontinuously distributed adhesive layer to obtain an adhesive tape. The resulting adhesive tape features an overall high air permeability and high lithium-ion permeability while ensuring sufficient bonding performance and mechanical strength due to the porous substrate with a high porosity and the discontinuously distributed adhesive layer, without affecting the transport of lithium ions in the battery.
(2) The present disclosure uses an aqueous coating solution or a solvent-based coating to obtain a uniform but discontinuous adhesive layer, which can effectively solve the problems that an ordinary olefin polymer is prone to self-sealing at high temperatures, resulting in reduced breathability and ion permeability, such that the impact on the overall air permeability and ion permeability of the adhesive tape are reduced.
(3) The high-permeability adhesive tape prepared in the present disclosure can facilitate uniform distribution of the electrolyte at the edges and corners of the battery, which helps ensure thorough wetting of internal components of the battery, improving the transport efficiency of ions, and improving charge-discharge performance of the battery. In addition, it can mitigate local overheating caused by uneven distribution of electrolyte. Uniform electrolyte distribution helps avoid rising of local temperature, thereby reducing a risk of thermal runaway and improving overall safety of the battery.
(4) The high-permeability adhesive tape prepared in the present disclosure helps reduce uneven stress during charging and discharging, and minimize microscopic damage inside the battery. The uniform distribution of ions and electrolyte reduces the likelihood of local overcharging or over-discharging, avoids local lithium plating, and thereby extends battery lifespan.

### BRIEF DESCRIPTION OF THE DRAWINGS

FIG. 1 is a schematic structural diagram according to a first embodiment of the present disclosure.
FIG. 2 is a schematic structural diagram according to a second embodiment of the present disclosure.
FIG. 3 is a schematic structural diagram according to a third embodiment of the present disclosure.

Reference numerals in the accompanying drawings: 1. porous substrate; 2. adhesive layer; 3. release layer A; and 4. release layer B.

### DETAILED DESCRIPTION OF EMBODIMENTS

In order to better understand the above technical solution, the above technical solution will be described in detail below with reference to the accompanying drawings and specific implementations. Apparently, the examples described are merely some examples rather than all examples of the present disclosure. All the other embodiments obtained by those of ordinary skill in the art based on the embodiments in the present invention without creative efforts shall fall within the protection scope of the present invention.

The terms used in the embodiment of the present invention are merely for the purpose of describing specific embodiments, and not intended to limit the present invention. As used in the examples and the appended claims of the present invention, singular forms "a" , "said" and "the" are intended to include plural forms as well, unless the context clearly indicates otherwise, "a plurality of" generally contains at least two types.

It should be noted that terms "comprising", "including" or any other variants thereof are intended to cover the non-exclusive including, thereby making that the goods or apparatus comprising a series of elements comprise not only those elements but also other elements that are not listed explicitly or the inherent elements to the goods or apparatus. Without further limitations, an element limited by the phrase "comprising/including a" does not exclude that there exists another same element in the goods or apparatus comprising the element.

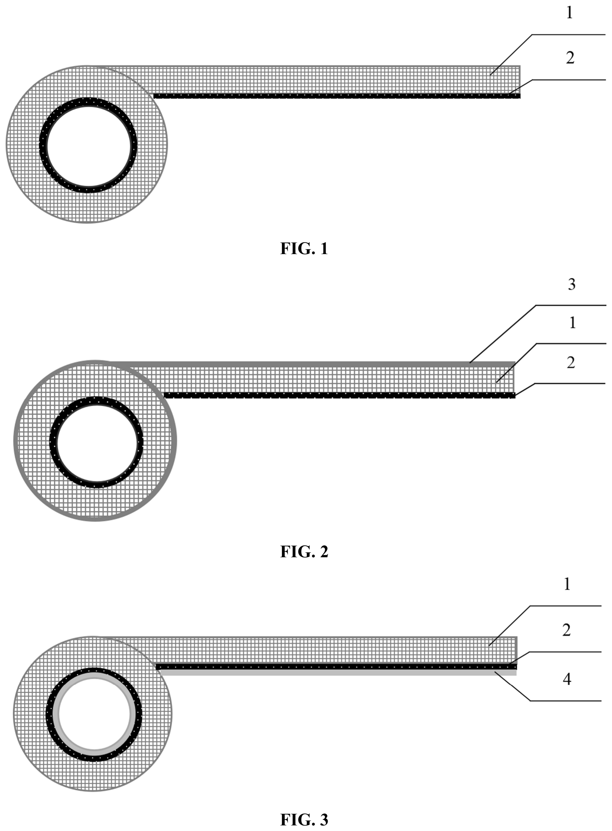

A high-permeability adhesive tape for a lithium battery is provided, the tape includes a porous substrate 1 and an adhesive layer 2, as shown in FIG. 1, specifically:
(I) Porous substrate 1: the porous substrate has a thickness of 5-50 µm and an air permeability of 50-450 s/100 mL, preferably 50-350 s/100 mL; the porous substrate includes at least one of a porous separator or nonwoven fabric; the porous separator has a porosity of 30-60%, and is selected from at least one of a single-layer polypropylene (PP) separator, a multi-layer PP separator, a single-layer polyethylene (PE) separator, a multi-layer PE separator, a PP/PE composite separator, a PP/PE/PP sandwich separator, and a polyvinylidene fluoride (PVDF) separator; and the nonwoven fabric has a pore size of ≤10 µm, and is selected from at least one of PP nonwoven fabric, PE nonwoven fabric, PET nonwoven fabric, and PTFE nonwoven fabric.
(II) Adhesive layer 2: the discontinuous adhesive layer 2 is formed by coating a thermoplastic coating solution onto at least one surface of the porous substrate 1.

The thermoplastic coating solution includes an olefin polymer and optionally a tackifying resin; the olefin polymer has a melting point of 60-150 °C, and is selected from at least one of polyolefin resin, an ethylene-vinyl acetate copolymer, an ethylene-acrylic acid copolymer, an ethylene-ethyl acrylate copolymer, an ethylene-methyl acrylate copolymer, an ethylene-methacrylic acid copolymer, and polyvinylidene fluoride (PVDF); and the polyolefin resin is selected from at least one of polypropylene resin, an amorphous α-olefin copolymer, an ethylene-octene or ethylene-butene copolymer, maleic anhydride-grafted polyolefin, acrylic acid-grafted polyolefin, methacrylic acid-grafted polyolefin, and acrylic acid/methacrylic acid blend-modified polyolefin.

The tackifying resin is selected from at least one of hydrogenated C5 resin, hydrogenated C9 resin, hydrogenated C5/C9 copolymer resin, hydrogenated dicyclopentadiene (DCPD), hydrogenated rosin, and hydrogenated polyterpene resin.

The thermoplastic coating solution is: 1. an aqueous coating solution; or 2. a solvent-based coating solution; specifically:
1. the aqueous coating solution, in parts by weight, includes the following raw materials:
   98-99.5 parts of aqueous emulsion;
   0-40 parts of inorganic filler; and
   0-2 parts of a wetting agent;
   the aqueous emulsion has a solid content of 1-40% and includes emulsion microspheres; the emulsion microspheres contain the olefin polymer, and the emulsion microspheres have a median particle diameter (D₅₀) of 0.2-2 µm; and
   the aqueous emulsion further includes 0.01-10 wt% of an emulsifier, and optionally, a co-emulsifier and a defoamer; the emulsifier is selected from at least one of C8-C18 higher fatty acid salt, alkyl sulfate, alkyl sulfonate, phosphate ester, polyoxyethylene fatty alcohol ether, polyoxyethylene alkylphenol ether having an EO segment of ≤ 20, and EO/PO block copolymer having an EO+PO segment of 20-80; the co-emulsifier is selected from C2-C5 short-chain alcohol or polyglycerol ester; and the defoamer is selected from one or more of a polysiloxane defoamer, a silicone emulsion defoamer, a polyether defoamer, a polyether-modified silicon defoamer, and a higher fatty alcohol defoamer.

The inorganic filler includes at least one of aluminum hydroxide, aluminum oxide, boehmite, zinc oxide, magnesium oxide, and boron nitride, with a median particle diameter (D₅₀) of 0.5-5 µm; and
the wetting agent includes an anionic wetting agent or a nonionic wetting agent. The anionic wetting agent is selected from alkyl sulfate, alkyl sulfonate, higher fatty acid salt, phosphate ester, fatty acid, or fatty acid sulfate salt; and the nonionic wetting agent is selected from one or more of polyoxyethylene alkylphenol ether, polyoxyethylene fatty alcohol ether, and EO/PO block copolymer, with a hydrophile-lipophile balance (HLB) value of 5-20, and preferably 7-13.

The preparation method of the above high-permeability adhesive tape for a lithium battery using the aqueous coating solution includes the following steps:
step 1: prepare an aqueous coating solution containing an olefin polymer according to the above-mentioned raw materials in parts by weight;
step 2: applying the aqueous coating solution onto at least one surface of the porous substrate 1, with a coating weight of 0.01-80 g/m², and preferably 0.5-20g/m²; where a coating method may be gravure coating, reverse roll coating, wire bar coating, slot-die coating, air-knife coating, curtain coating, spray coating, dip coating, gap coating, and the like; and the spray coating requires no addition of a wetting agent; and
step 3: drying the coating solution, and allowing the solid components to be attached to a surface of the porous substrate 1 in a basically uniform but discontinuous manner in the form of microspheres or quasi-spherical structures, thereby obtaining the high-permeability adhesive tape for a lithium battery. The drying apparatus is preferably a drying tunnel, with a drying temperature of 30-150 °C, and preferably 50-120 °C; and drying time is 10-300 s, and preferably 60-180 s.

In the step 1, the aqueous coating solution may be prepared according to the above raw material ratios, following the existing emulsion preparation technology. The aqueous emulsion dispersed with microspheres may be prepared using a hot melt method, a granulation dispersion method, a phase inversion method and other processes.

For example, (1) the preparation of the aqueous emulsion by the hot melt method may include:
1) adding raw materials of the aqueous emulsion to a pressure reactor according to the formula;
2) adding deionized water, an alkaline substance, a solvent, an emulsifier, etc., pressurizing to 1-15 MPa, heating to 90-200 °C, and shearing at a high speed; and
3) cooling down and discharging to obtain the aqueous emulsion.

(2) the preparation of the aqueous emulsion by the granulation dispersion method may include:
   1) adding raw materials and a solvent in a reaction kettle to dissolve according to the formula;
   2) spray-drying the materials using a spray device to obtain material powder; and
   3) dispersing the emulsifier and other auxiliary agents along with the material powder in water at a high speed to obtain the aqueous emulsion.
(3) the preparation of the aqueous emulsion by the phase inversion method may include:
   1) adding raw materials to a reaction kettle according to the formula, and adding a solvent in the reaction kettle and dissolving it fully at 40-150 °C;
   2) adding the emulsifier, the alkaline substance, and deionized water to the reaction kettle, stirring and performing high-speed shearing; and
   3) removing the solvent using a distillation apparatus to obtain the aqueous emulsion.

In addition, particle sizes of the emulsion microspheres may be adjusted by controlling types and amounts of the emulsifier, the co-emulsifier, and the solvent, as well as process parameters such as heating temperature, high-speed dispersion/shear rate, pressure, and duration. Subsequently, the inorganic filler, the colorant, the wetting agent, and other components may be added as needed to obtain the aqueous coating solution.

2. The solvent-based coating solution contains the olefin polymer, a solvent, and optionally inorganic filler. A concentration of the olefin polymer is 5-20 wt%, and the solvent-based coating solution is applied to form the discontinuous adhesive layer 2 by spraying.

The solvent is selected from at least one of an aromatic hydrocarbon solvent, a ketone solvent or an aliphatic hydrocarbon solvent. The inorganic filler in the coating solution has a mass concentration of 0-30 wt%, and includes aluminum hydroxide, aluminum oxide, boehmite, zinc oxide, magnesium oxide, and boron nitride, with a median particle diameter (D₅₀) of 0.5-5 µm; and

A preparation method of the above high-permeability adhesive tape for a lithium battery using the solvent-based coating solution includes the following steps:
step 1: preparing a solvent-based coating solution containing the olefin polymer;
step 2: spraying the solvent-based coating solution onto at least one surface of the porous substrate 1, with a coating weight of 0.01-80 g/m², and preferably 0.5-20 g/m²; and
step 3: drying the coating solution; as the solvent evaporates, a solute precipitates and attached to a surface of the porous substrate 1 in a basically uniform but discontinuous manner, thereby obtaining the high-permeability adhesive tape for a lithium battery. The drying apparatus is preferably a drying tunnel, with a drying temperature of 30-150 °C, and preferably 50-120 °C; and drying time is 10-300 s, and preferably 60-180 s.

(III) Optionally, a release layer is coated on a surface of the porous substrate 1 opposite to the adhesive layer 2 and/or on a surface of the adhesive layer 2 opposite to the porous substrate 1. For example, a release agent may be coated on a surface of the porous substrate 1 opposite to the adhesive layer 2 to form a release layer A 3 (see FIG. 2); and a release film may be laminated on a surface of the adhesive layer 2 opposite to the porous substrate 1 to form a release layer B 4 (see FIG. 3).

### Example 1

A high-permeability adhesive tape for a lithium battery includes a porous substrate and an adhesive layer, specifically:
(1) porous substrate: a polypropylene (PP) separator with a thickness of 20 µm, air permeability of 180 s/100 mL, and a porosity of 50 ± 10% was selected as a substrate;
(2) adhesive layer: a discontinuous adhesive layer was formed by applying a thermoplastic coating solution on one surface of the porous substrate; and the thermoplastic coating solution was an aqueous coating solution, which was composed of the following raw materials in parts by weight:
   99 parts of aqueous emulsion;
   1 part of a wetting agent;

the aqueous emulsion had a solid content of 3% and emulsion microspheres were dispersed; the emulsion microspheres contained an olefin polymer; the olefin polymer was maleic anhydride grafted polypropylene (trade name: Polinker PL2480), and the emulsion microspheres had a median particle diameter (D₅₀) of 0.3 µm; and a melting point of approximately 85 °C;

The high-permeability adhesive tape was prepared according to the following steps:
step 1: a thermoplastic coating solution was prepared according to the above formulation parameters;
step 2: the coating solution was coated on one surface of the porous substrate by gravure coating, with a coating weight of 0.18 g/m²; and
step 3: the coating solution wad dried in a drying tunnel at a temperature of 60-80 °C for 60 s to obtain the high-permeability adhesive tape for a lithium battery.

### Example 2

The differences between this example and Example 1 lie in that a solid content of the aqueous emulsion used in this example was 8%, and a coating weight of the coating solution was 0.98 g/m².

### Example 3

The differences between this example and Example 1 lie in that a solid content of the aqueous emulsion used in this example was 20%, and a coating weight of the coating solution was 16.6g/m².

### Example 4

The differences between this example and Example 1 lie in that a solid content of the aqueous emulsion used in this example was 30%, and a coating weight of the coating solution was 26.3g/m².

### Example 5

The differences between this example and Example 3 lie in that the emulsion microspheres used in this example had a median particle diameter (D₅₀) of about 0.5 µm, and a coating weight of the coating solution was 16.4 g/m².

### Example 6

The differences between this example and Example 3 lie in that the emulsion microspheres used in this example had a median particle diameter (D₅₀) of about 1.3 µm, and a coating weight of the coating solution was 17.2 g/m².

### Example 7

The differences between this example and Example 3 lie in that the emulsion microspheres used in this example had a median particle diameter (D₅₀) of about 1.8 µm, and a coating weight of the coating solution was 17.3 g/m².

### Example 8

The differences between this example and Example 6 lie in that a coating weight of the coating solution in this example was 16.7 g/m², and a drying temperature of the drying channel was set to 80-100°C.

### Example 9

The differences between this example and Example 6 lie in that a coating weight of the coating solution in this example was 16.7 g/m², and drying time of the drying channel was set to 180 s.

### Example 10

The differences between this example and Example 6 lie in that a coating weight of the coating solution in this example was 16.9g/m², and drying time of the drying channel was set to 300 s.

### Example 11

The differences between this example and Example 6 lie in that the olefin polymer contained in the emulsion microspheres in this example was maleic anhydride grafted polypropylene (trade name: Polinker PL2400), with a melting point of approximately 60 °C; and a coating weight of the coating solution of 16.6 g/m².

### Example 12

The differences between this example and Example 6 lie in that the olefin polymer contained in the emulsion microspheres in this example was maleic anhydride grafted polypropylene (trade name: Fusabond P353), with a melting point of 100°C; and a coating weight of the coating solution of 17.2 g/m².

### Example 13

The differences between this example and Example 6 lie in that the olefin polymer contained in the emulsion microspheres in this example was maleic anhydride grafted polypropylene (trade name: a mixture of Exxelor PO 1015 and Polinker PL2400), with a melting point of approximately 120°C, and a coating weight of the coating solution of 17.0 g/m².

### Example 14

The differences between this example and Example 6 lie in that the olefin polymer contained in the emulsion microspheres in this example was maleic anhydride grafted polypropylene (trade name: Exxelor PO 1015), with a melting point of approximately 140°C; and a coating weight of the coating solution of 16.8 g/m².

### Example 15

The differences between this example and Example 3 lie in that this example used a 9 µm PP separator as a substrate, with an air permeability of 120 s/100 mL; and a coating weight of the coating solution was 16.5 g/m².

### Example 16

The differences between this example and Example 3 lie in that this example used a 45 µm PP separator as a substrate, with an air permeability of the substrate of 280 s/100 mL; and a coating weight of the coating solution was 16.6 g/m².

### Example 17

The differences between this example and Example 3 lie in that this example used 20 µm PP nonwoven fabric as a substrate, with a pore size of ≤10 µm and an air permeability of the substrate of 220 s/100 mL; and a coating weight of the coating solution was 16.5 g/m².

### Example 18

The differences between this example and Example 3 lie in that this example used 9 µm PP nonwoven fabric as a substrate, with a pore size of ≤10 µm and an air permeability of the substrate of 130 s/100 mL; and a coating weight of the coating solution was 16.8 g/m².

### Example 19

The differences between this example and Example 3 lie in that this example used 45 µm PP nonwoven fabric as a substrate, with a pore size of ≤10 µm and an air permeability of the substrate of 300 s/100 mL; and a coating weight of the coating solution was 16.4 g/m².

### Comparative Example 1

The differences between Comparative Example 1 and Example 3 lie in that this Comparative Example used a 60 µm PP separator as a substrate, with a porosity of 50 ± 10% and an air permeability of the substrate of 370 s/100 mL.

### Comparative Example 2

The differences between Comparative Example 2 and Example 3 lie in that a coating weight of the coating solution in this Comparative Example was about 85 g/m², a drying temperature of the drying channel was set to 80-100°C, and drying time was 180 s.

### Example 20

The differences between this example and Example 6 lie in that this example used EVA emulsion microspheres, the EVA (trade name: UL 15019CC) had a melting point of approximately 85 °C, and a coating weight of the coating solution was 16.3 g/m².

### Example 21

A high-permeability adhesive tape for a lithium battery includes a porous substrate and an adhesive layer, specifically:
(1) porous substrate: a polypropylene (PP) separator with a thickness of 20 µm, air permeability of 180 s/100 mL, and a porosity of 50± 10% was selected as a substrate;
(2) adhesive layer: a discontinuous adhesive layer was formed by coating a thermoplastic coating solution on one surface of the porous substrate; and the thermoplastic coating solution was an N-methylpyrrolidone solution (NMP, a solvent-based coating solution) of polyvinylidene fluoride (PVDF, trade name: Solef 11010), with a concentration of 12% and a melting point of 140 °C.

The high-permeability adhesive tape was prepared according to the following steps:
step 1: a thermoplastic coating solution was prepared according to the above formulation parameters;
step 2: the coating solution was sprayed on one surface of the porous substrate, with a coating weight of 17.4 g/m²; and
step 3: the coating solution wad dried in a drying tunnel at a temperature of 100-120°C for 180 s to obtain the high-permeability adhesive tape for a lithium battery.

### Example 22

The differences between this example and Example 21 lie in that this example used a 9 µm PP separator as a substrate, with an air permeability of 120 s/100 mL.

### Example 23

The differences between this example and Example 21 lie in that this example used a 45 µm PP separator as a substrate, with an air permeability of 280 s/100 mL.

### Example 24

The differences between this example and Example 21 lie in that this example used a 20 µm PP nonwoven fabric as a substrate, with an air permeability of 220 s/100 mL.

### Example 25

The differences between this example and Example 21 lie in the solvent-based coating solution used in this example was a methyl isobutyl ketone (MIBK)-methylcyclohexane solution of polyolefin elastomer (POE) (trade name: Vistamaxx 3588FL), with a concentration of 10% and a melting point of approximately 85 °C; and a coating weight was 17.1 g/m², a drying temperature in the drying tunnel was 60-80°C, and drying time was 60 s.

### Comparative Example 3:

The differences between Comparative Example 3 and Example 21 lie in that this Comparative Example used a 60 µm PP separator as a substrate, with a porosity of 50 ± 10% and an air permeability of the substrate of 370 s/100 mL.

### Comparative Example 4

The differences between Comparative Example 4 and Example 21 lie in that a coating weight of the coating solution in this Comparative Example was about 85 g/m², a drying temperature of the drying channel was set to 100-120°C, and drying time was 300 s.

The coating solution and process parameters of all examples and comparative examples are shown in Table 1:

**Table 1**

| | | Process conditions | | | | | | |
|---|---|---|---|---|---|---|---|---|
| | Type of coating solution | Type of substrate | Solid content /% | Particle size/µm | Melting point/ °C | Coating weight/ g/m² | Temperatur e of drying tunnel/°C | Drying time/mi n |
| **Example 1** | Polyolefin emulsion | 20 µm PP separator | 3 | 0.3 | 85 | 0.18 | 60-80 | 1 |
| **Example 2** | | | 8 | 0.3 | 85 | 0.98 | 60-80 | 1 |
| **Example 3** | | | 20 | 0.3 | 85 | 16.6 | 60-80 | 1 |
| **Example 4** | | | 30 | 0.3 | 85 | 26.3 | 60-80 | 1 |
| **Example 5** | | | 20 | 0.5 | 85 | 16.4 | 60-80 | 1 |
| **Example 6** | | | 20 | 1.3 | 85 | 17.2 | 60-80 | 1 |
| **Example 7** | | | 20 | 1.8 | 85 | 17.3 | 60-80 | 1 |
| **Example 8** | | | 20 | 1.3 | 85 | 16.7 | 80-100 | 1 |
| **Example 9** | | | 20 | 1.3 | 85 | 16.7 | 60-80 | 3 |
| **Example 10** | | | 20 | 1.3 | 85 | 16.9 | 60-80 | 5 |
| **Example 11** | | | 20 | 1.3 | 60 | 16.6 | 60-80 | 1 |
| **Example 12** | | | 20 | 1.3 | 100 | 17.2 | 60-80 | 1 |
| **Example 13** | | | 20 | 1.3 | 120 | 17 | 60-80 | 1 |
| **Example 14** | | | 20 | 1.3 | 140 | 16.8 | 60-80 | 1 |
| **Example 15** | | 9 µm PP separator | 20 | 0.3 | 85 | 16.5 | 60-80 | 1 |
| **Example 16** | | 45 µm PP separator | 20 | 0.3 | 85 | 16.6 | 60-80 | 1 |
| **Example 17** | | 20 µm PP nonwove n fabric | 20 | 0.3 | 85 | 16.5 | 60-80 | 1 |
| **Example 18** | | 9 µm PP nonwove n fabric | 20 | 0.3 | 85 | 16.8 | 60-80 | 1 |
| **Example 19** | | 45 µm PP nonwove n fabric | 20 | 0.3 | 85 | 16.4 | 60-80 | 1 |
| **Comparativ e Example 1** | | 60 µm PP separator | 20 | 0.3 | 85 | 16.6 | 60-80 | 1 |
| **Comparativ e Example 2** | | 20 µm PP separator | 20 | 0.3 | 85 | 85 | 80-100 | 3 |
| **Example 20** | EVA emulsion | 20 µm PP separator | 20 | 1.3 | 85 | 16.3 | 60-80 | 1 |
| **Example 21** | NMP solution of PVDF | 20 µm PP separator | 12 | - | 140 | 17.4 | 100-120 | 3 |
| **Example 22** | | 9 µm PP separator | 12 | - | 140 | 17.4 | 100-120 | 3 |
| **Example 23** | | 45 µm PP separator | 12 | - | 140 | 17.4 | 100-120 | 3 |
| **Example 24** | | 20 µm PP nonwove n fabric | 12 | - | 140 | 17.4 | 100-120 | 3 |
| **Comparativ e Example 3** | | 60 µm PP separator | 12 | - | 140 | 17.4 | 100-120 | 3 |
| **Comparativ e Example 4** | | 20 µm PP separator | 12 | - | 140 | 85 | 100-120 | 5 |
| **Example 25** | MIBK-methylcyc lohexane solution of POE | 20 µm PP separator | 10 | - | 85 | 17.1 | 60-80 | 1 |

### Test method:

### (1) Peel strength test method - Before electrolyte immersion

Test method: An aluminum foil to be tested was cleaned with isopropyl alcohol and air-dried; an adhesive tape sample was cut into a strip with a width of 24 mm and a length of 100 mm; a test surface of the adhesive tape strip was aligned with the aluminum foil, and were laminated at 95 °C and 0.2 MPa for 1 s, without generating bubbles or wrinkles; and a back of the aluminum foil (a side without the adhesive tape) was attached to a stainless steel plate using a double-sided adhesive tape; a timer started counting for conditioning for 20 min; an end of the stainless steel plate was fixed to a lower fixture of a tensile machine and was perpendicular to a horizontal plane; a substrate of the adhesive tape sample was clamped by the other fixture, and a peel test was performed at a speed of 304.8 mm/min; and a section with stable data (not shorten than 80 mm) was selected to calculate the peel strength (in N/m).

### (2) Peel strength test method - After electrolyte immersion

Test method: An adhesive tape strip sample was prepared according to the method described in (1); after conditioning, the adhesive tape strip sample was immersed in a container filled with an electrolyte solvent, ensuring that the adhesive tape strip sample was completely submerged; after baking at 85 °C for 24 h, the adhesive tape strip sample was taken out, and any residual electrolyte solvent on the surface was wiped and cleaned; and after resting for 20 min, the peel strength of the cleaned strip sample was tested following the method in (1). The electrolyte solvent was composed of 20 wt% ethylene carbonate (EC), 50 wt% ethyl methyl carbonate (EMC), and 30 wt% ethyl propionate (EP).

### (3) Air permeability test method

The adhesive tape sample was cut into either a circular sheet with a diameter greater than 10 cm or a square sheet with a side length greater than 10 cm; the test device was powered on, a sliding cylinder abutted against a top of the sliding cylinder; the sliding cylinder was rotated until an infrared sensor was perpendicular to a central axis of a 100 mL test zone; the adhesive tape to be tested was placed on a test holder and tightened; a "RESET" button was pressed when a screen displayed "TIMER SEEKING STARTING MARK", and the sliding cylinder was then released to start the test. After the test was completed, test results were shown on the screen (in s/100 mL).

### (4) Air permeability test after high-temperature aging

The adhesive tape sample was cut into either a circular sheet with a diameter greater than 10 cm or a square sheet with a side length greater than 10 cm, the sheet was then placed in an oven and baked at 110 °C for 24 h, and then taken out and cooled to room temperature, and an air permeability of the sheet was tested according to the test method of (3).

### (5) Air permeability test after electrolyte immersion

The adhesive tape sample was cut into either a circular sheet with a diameter greater than 10 cm or a square sheet with a side length greater than 10 cm, and was then immersed in a container filled with an electrolyte solvent, ensuring that the adhesive tape strip sample was completely submerged; the sheet was baked at 85°C for 24 h, then taken out and cooled to room temperature and kept for 20 min, and an air permeability of the sheet was tested according to the test method of (3). The electrolyte solvent was composed of 20 wt% ethylene carbonate (EC), 50 wt% ethyl methyl carbonate (EMC), and 30 wt% ethyl propionate (EP).

Test results were shown in Table 2.

**Table 2**

| | Test results | | | | | |
|---|---|---|---|---|---|---|
| | Air permeabilit y of substrate P₀ (s/100mL) | Air permeabilit y of adhesive tape P₁ (s/100mL) | Air permeability after high-temperature aging P₂ (s/100mL) | Air permeability after electrolyte immersion P₃ (s/100mL) | Peel strength (N/m) | Peel strength after electrolyte immersion (N/m) |
| **Example 1** | 180 | 228 | 331 | 235 | 9.7 | 4.2 |
| **Example 2** | 180 | 262 | 435 | 271 | 18.3 | 11.8 |
| **Example 3** | 180 | 371 | 563 | 385 | 25.1 | 23.6 |
| **Example 4** | 180 | 436 | 673 | 467 | 27.9 | 26.5 |
| **Example 5** | 180 | 314 | 525 | 335 | 21.3 | 20.7 |
| **Example 6** | 180 | 244 | 382 | 259 | 18.6 | 17.5 |
| **Example 7** | 180 | 208 | 296 | 224 | 11.6 | 9.2 |
| **Example 8** | 180 | 321 | 562 | 347 | 17.9 | 17.2 |
| **Example 9** | 180 | 258 | 397 | 273 | 18.2 | 17.6 |
| **Example 10** | 180 | 309 | 465 | 326 | 18.4 | 17.8 |
| **Example 11** | 180 | 327 | 659 | 351 | 24.3 | 21.5 |
| **Example 12** | 180 | 286 | 538 | 303 | 20.8 | 18.5 |
| **Example 13** | 180 | 213 | 286 | 231 | 15.7 | 14.6 |
| **Example 14** | 180 | 215 | 235 | 229 | 10.2 | 8.7 |
| **Example 15** | 120 | 175 | 224 | 182 | 22.3 | 20.6 |
| **Example 16** | 280 | 412 | 647 | 435 | 26.4 | 24.8 |
| **Example 17** | 220 | 395 | 587 | 408 | 25.6 | 23.9 |
| **Example 18** | 130 | 188 | 242 | 203 | 21.7 | 20.2 |
| **Example 19** | 300 | 425 | 668 | 446 | 26.8 | 25.1 |
| **Comparativ e Example 1** | 370 | 688 | 3896 | 879 | 25.4 | 24.9 |
| **Comparativ e Example 2** | 180 | 3058 | > 10000 | 4125 | Separato r tearing | Separator tearing |
| **Example 20** | 180 | 291 | 485 | 307 | 16.8 | 12.5 |
| **Example 21** | 180 | 305 | 377 | 346 | 8.4 | 7.3 |
| **Example 22** | 120 | 183 | 208 | 205 | 7.2 | 5.8 |
| **Example 23** | 280 | 416 | 498 | 459 | 8.9 | 7.7 |
| **Example 24** | 220 | 332 | 396 | 347 | 8.3 | 7.1 |
| **Example 25** | 180 | 254 | 407 | 268 | 18.2 | 17.1 |
| **Comparativ e Example 3** | 370 | 632 | 1858 | 866 | 8.8 | 7.6 |
| **Comparativ e Example 4** | 180 | 2563 | 5386 | 4125 | Separato r tearing | Separator tearing |

Through extensive experiments and optimization, the adhesive tape of the present disclosure has an initial air permeability of P₁≤2.5×P₀, where P₀ represents an air permeability of the porous substrate and falls within a range of 50-450 s/100 mL, and preferably 50-350 s/100 mL.

After high-temperature aging (for example, the adhesive tape was baked at 110°C for 24 h, and then taken out to cool to room temperature for testing), the adhesive tape has an air permeability of P₂≤4.0×P₁, preferably P₂≤2.5×P₁, and more preferably the air permeability P₂ of the adhesive tape satisfies the relationship: P₂=Aₕ×P₁-Bₕ, where Aₕ falls within a range of 1.2-2.2, and Bₕ falls within a range of 0-30;

After electrolyte immersion (for example, the adhesive tape was completely submerged in an electrolyte solvent, then baked at 85 °C for 24 h, taken out and wiped a surface thereof, and test was performed after resting for 20 min; where the electrolyte solvent was composed of 20 wt% EC, 50 wt% EMC, and 30 wt% EP), an air permeability of the adhesive tape satisfies P₃≤1.2×P₁, and preferably the air permeability P₃ of the adhesive tape satisfies P₃=Aₑ×P₁+Bₑ, where Aₑ falls within a range of 1.02-1.1, and Bₑ falls within a range of 0-15. The present disclosure selects a porous substrate with excellent permeability, and combines the porous substrate with an appropriate adhesive layer to obtain the lithium battery adhesive tape exhibiting excellent initial air permeability, air permeability after high-temperature aging, and air permeability after electrolyte immersion. Without affecting the transport of lithium ions, the adhesive tape can protect the electrode sheets from cracking under stress during thermal lamination, but also prevent the battery from lithium plating during battery cycling, thereby improving the safety use and extending service life of the battery.

By comprising the compositions and test results of the examples and comparative examples, it can be seen that multiple options both the porous substrate and the adhesive layer allow for various material options. However, when meeting the above preset material selection method and test results, both the porous substrate and the adhesive layer can basically meet permeability and adhesion requirements, thus satisfying application scenarios of the adhesive tape. In contrast, although some parameters in Comparative Examples 1-4 meet the requirements, they cannot meet the comprehensive requirements for lithium battery adhesive tapes as a whole.

Although the preferential embodiments of the present disclosure have been described, those skilled in the art may make additional changes and modifications to these embodiments once they learn the basic inventive concept. Therefore, the technical solutions of the present disclosure are intended to be interpreted as including the preferential embodiments and all changes and modifications falling within the scope of the present disclosure. It will be apparent to those skilled in the art that various modifications and variations may be made to the present disclosure without departing from the spirit and scope of the present disclosure.

## Claims

1. A high-permeability adhesive tape, **characterized by** comprising a laminated porous substrate and an adhesive layer; **characterized in that**
the porous substrate has a thickness of 5-50 µm and an air permeability of 50-450 s/100 mL, and the porous substrate comprises at least one of a porous separator or nonwoven fabric;
the adhesive layer is discontinuous and formed by coating a thermoplastic coating solution onto at least one surface of the porous substrate; and the thermoplastic coating solution is an aqueous coating solution or a solvent-based coating solution, and comprises an olefin polymer and optionally a tackifying resin;
the adhesive tape has an initial air permeability of P₁≤2.5×P₀, wherein P₀ represents an air permeability of the porous substrate;
after high-temperature aging, the adhesive tape has an air permeability of P₂ ≤4.0×P₁; and
after electrolyte immersion, the adhesive tape has an air permeability of P₃ ≤1.2×P₁.

2. The high-permeability adhesive tape according to claim 1, **characterized in that** the olefin polymer has a melting point of 60-150 °C, and is selected from at least one of polyolefin resin, an ethylene-vinyl acetate copolymer, an ethylene-acrylic acid copolymer, an ethylene-ethyl acrylate copolymer, an ethylene-methyl acrylate copolymer, an ethylene-methacrylic acid copolymer, and polyvinylidene fluoride (PVDF); and
the tackifying resin is selected from at least one of hydrogenated C5 resin, hydrogenated C9 resin, hydrogenated C5/C9 copolymer resin, hydrogenated dicyclopentadiene (DCPD), hydrogenated rosin, and hydrogenated polyterpene resin.

3. The high-permeability adhesive tape according to claim 2, **characterized in that** the polyolefin resin is selected from at least one of polypropylene resin, an amorphous α-olefin copolymer, an ethylene-octene or ethylene-butene copolymer, maleic anhydride-grafted polyolefin, acrylic acid-grafted polyolefin, methacrylic acid-grafted polyolefin, and acrylic acid/methacrylic acid blend-modified polyolefin.

4. The high-permeability adhesive tape according to any one of claims 1-3, **characterized in that** the porous substrate comprises a porous separator having a porosity of 30-60%, and is selected from at least one of a single-layer polypropylene (PP) separator, a multi-layer PP separator, a single-layer polyethylene (PE) separator, a multi-layer PE separator, a PP/PE composite separator, a PP/PE/PP sandwich separator, and a polyvinylidene fluoride (PVDF) separator; and/or
the porous substrate comprises nonwoven fabric having a pore size of ≤10 µm, and is selected from at least one of PP nonwoven fabric, PE nonwoven fabric, PET nonwoven fabric, and PTFE nonwoven fabric.

5. The high-permeability adhesive tape according to claim 4, **characterized in that** the thermoplastic coating solution is an aqueous coating solution, and comprises, in parts by weight, the following raw materials:
98-99.5 parts of aqueous emulsion;
0-40 parts of inorganic filler; and
0-2 parts of a wetting agent;
the aqueous emulsion has a solid content of 1-40%, and comprises emulsion microspheres; and the emulsion microspheres comprise the olefin polymer, and the emulsion microspheres have a median particle diameter (D₅₀) of 0.2-2 µm;
the inorganic filler comprises at least one of aluminum hydroxide, aluminum oxide, boehmite, zinc oxide, magnesium oxide, and boron nitride, with a median particle diameter (D₅₀) of 0.5-5 µm; and
the wetting agent comprises an anionic wetting agent or a nonionic wetting agent.

6. The high-permeability adhesive tape according to claim 5, **characterized in that** the aqueous emulsion further comprises 0.01-10 wt% of an emulsifier, and optionally a co-emulsifier and a defoamer; and
the emulsifier is selected from at least one of C8-C18 higher fatty acid salt, alkyl sulfate, alkyl sulfonate, phosphate ester, polyoxyethylene fatty alcohol ether, polyoxyethylene alkylphenol ether having an EO segment of ≤ 20, and EO/PO block copolymer having an EO+PO segment of 20-80.

7. The high-permeability adhesive tape according to claim 4, **characterized in that** the thermoplastic coating solution is a solvent-based coating solution and comprises the olefin polymer, a solvent, and optionally inorganic filler; and a concentration of the olefin polymer is 5-20 wt%, and the solvent-based coating solution is applied to form the discontinuous adhesive layer by spraying.

8. The high-permeability adhesive tape according to any one of claims 5-7, **characterized by** further comprising at least one release layer, wherein the release layer is laminated on a surface of the porous substrate opposite to the adhesive layer, and/or on a surface of the adhesive layer opposite to the porous substrate.

9. A preparation method for the high-permeability adhesive tape according to any one of claims 1-8, **characterized by** comprising the following steps:
step 1: preparing a thermoplastic coating solution containing an olefin polymer;
step 2: applying the thermoplastic coating solution onto at least one surface of the porous substrate, with a coating weight of 0.01-80 g/m²; and
step 3: drying the thermoplastic coating solution to obtain the high-permeability adhesive tape.

10. Application of the high-permeability adhesive tape according to any one of claims 1-8 in electrode sheet protection, anode bonding, tab protection, and winding termination of a lithium battery, **characterized in that** the adhesive tape is adhered to a bonding location by cold pressing or hot pressing.
